# EUROPÄISCHE PATENTSCHRIFT

(11) **EP 1 298 353 B1**
(45) Veröffentlichungstag und Bekanntmachung des Hinweises auf die Patenterteilung: **14.04.2010**
(21) Anmeldenummer: 02019614.3
(22) Anmeldetag: 03.09.2002
(51) Int. Cl.: F16H 48/06, F16H 1/12

(54) **Zahnradpaarung und deren Verwendung**
Gear pair and use thereof
Engrenage et son utilisation

(30) Priorität: 27.09.2001 DE 10147681
(43) Veröffentlichungstag der Anmeldung: 02.04.2003
(73) Patentinhaber: Daimler AG, 70327 Stuttgart (DE)
(72) Erfinder: Zeise, Dirk, 34127 Kassel (DE)
(74) Vertreter: JENSEN & SON

(56) Entgegenhaltungen:
- EP-A- 0 118 261
- WO-A-92/01877
- DE-A1- 2 751 360
- DE-A1- 10 235 677
- DE-A1- 19 536 800
- DE-C- 512 872
- US-A- 1 262 759
- US-A- 1 893 572
- US-A- 4 677 870
- US-A- 4 719 813

## Beschreibung

Die Erfindung betrifft gemäß Patentanspruch 1 ein Differential.

Aus der gattungsgemäßen WO 92/01877 ist bereits ein Zahnradpaarung bekannt, welche in einem Kronenraddifferential Verwendung findet. Die Zahnradpaarung umfasst ein Kronenrad und ein mit diesem kämmendes Stirnrad. Das Stirnrad ist in die vom Kronenraddifferential nach außen weisende Richtung am Gehäuse und in die nach innen weisende Richtung an einer Hülse des Differentialbolzens anlegbar, so das stets der kämmende Eingriff zwischen dem Kronenrad und dem Stirnrad sichergestellt ist.

Ferner zeigt die DE 195 36 800 A1 ein Hinterachsgetriebe, bei welchem die Antriebsverzahnung eine Ritzelwelle aufweise, die als Stirnrad ausgeführt ist.

Die EP 0 118 261 A1 beschreibt ein Kegelradgetriebe, bei dem an einem Tellerrad eine ringförmige Rippe so angeordnet ist, dass sie ein axiales Ende eines mit dem Tellerrad kämmenden Stirnrads teilweise überdeckt.

Die DE 27 51 360 A1 und die US 1,893,572 beschreiben Kegelgetriebe, bei denen Druckringe mit einem Stirnrad so verbunden sind, dass mehrere Zähne des Stirnrads überdeckt sind.

Die US 1,262,759 beschreibt ein Differential mit einer Zahnradpaarung, bei welcher ein Zahnrad als ein Kronenrad ausgeführt ist. Das andere Zahnrad besteht aus zwei koaxial angeordneten Scheiben, die mit mehreren Laufrollen verbunden sind. Die Laufrollen stehen dabei im Eingriff mit dem Kronenrad.

Aufgabe der Erfindung ist es, ein Differential zu schaffen, welches eine geringe Anzahl von Bauteilen benötigt.

Diese Aufgabe wird erfindungsgemäß durch die Merkmale von Patentanspruch 1 gelöst.

Erfindungsgemäß ist das Differential als ein Kronenraddifferential ausgeführt. Dabei kann in besonders vorteilhafter Weise ein Differentiaibolzen/-kreuz entfallen.

Das erfindungsgemäße Differential kann höhere Antriebsmomente über das Differential übertragen. Dies wird erreicht, indem das Antriebsmoment vom Gehäuse des Differentials nicht in einen Differentialbolzen, sondern in den Anschlagkörper eingeleitet wird, wobei dieser scheibenförmig ausgestaltet ist. Diese scheibenförmige Ausgestaltung ermöglicht bezüglich der geometrischen Achse des Ausgleichsrades eine radiale Lagerung im Gehäuse. Aus der im Vergleich zu einem Differentialbolzen großen Anlagefläche am Gehäuse folgt eine entsprechend geringe Flächenpressung trotz hoher Antriebsmomente.

Ein Vorteil der Erfindung gemäß Patentanspruch ist der, dass infolge eines mit dem zweiten Zahnrad verbundenen Anschlagkörpers die Verschiebung des zweiten Zahnrades zumindest in eine Richtung verhindert wird. Da sich der Anschlagkörper zumindest zwischen mehreren Zähnen erstreckt, ist dieser mit den Zähnen des ersten Zahnrades zur Anlage bringbar. Es sind keine weiteren Bauteile mehr notwendig, um das zweite Zahnrad in diese Richtung abzustützen.

Durch die Ausgestaltung der Zahnradpaarung als Kronenrad-Stirnrad-Paarung, sind beide Zahnräder im Winkel von 90° zueinander anordenbar.

Mittels zwei Anschlagkörpern wird eine Verschiebung des zweiten Zahnrades in dessen beide axiale Richtungen verhindert, indem der jeweilige Anschlagkörper in beiden Richtungen zum Anschlag an die Zähne des ersten Zahnrades kommt.

Die Weiterbildung gemäß Patentanspruch 2 verhindert in vorteilhafter Weise, dass Kräfte vom ersten Zahnrad in den Anschlagkörper bzw. das zweite Zahnrad eingeleitet werden. Durch diese Kraftfreiheit auf den Anschlagkörper werden Vorteile hinsichtlich des Wirkungsgrades und des Verschleißes erreicht.

Patentanspruch 3 zeigt eine besonders vorteilhafte Ausgestaltung der Erfindung, die eine kompakte Bauweise bei maximal möglicher Abstützung des zweiten Zahnrades gegenüber dem ersten Zahnrad ermöglicht.

Patentansprüche 4 und 5 zeigen besonders vorteilhafte Ausgestaltung der Erfindung, bei welchen besonders hohe Kräfte übertragen werden können. Durch die bewegungsfeste Verbindung bzw. sogar die Einteiligkeit zwischen dem zweiten Zahnrad und dem Anschlagkörper wird eine besonders hohe Zahnfußfestigkeit erreicht.

Weitere Vorteile der Erfindung gehen aus der Patentansprüchen 6-7, der Beschreibung und den Zeichnungen hervor.

Es zeigen:
Fig. 1 ein Krönenraddifferential in einer geschnittenperspektivischen Darstellung, wobei durch eine Ebene geschnitten wird, welche zwischen einer Rotationsachse des Kronenraddifferentials und einer geometrischen Achse von Ausgleichsrädern aufgespannt wird,
Fig. 2 das Kronenraddifferential aus Fig. 1 in einer geschnitten-zweidimensionalen Darstellung,
Fig. 3 das Kronenraddifferential in einem Schnitt gemäß Linie III-III aus Fig. 2,
Fig. 4 das Kronenraddifferential aus Fig. 1 bis Fig. 3 in einer perspektivischen Darstellung, wobei ausschließlich eines von zwei Stirnrädern dargestellt ist,
Fig. 5 eine Zahnradpaarung, welche Verwendung in einem Kronenraddifferential gemäß Fig. 1 bis Fig. 4 findet,
Fig. 6 eine Zahnradpaarung gemäß Fig. 5 in einer geschnittenen Darstellung, wobei der Schnitt durch eine Ebene erfolgt, welche zwischen der Rotationsachse eines Kronenrades und der geometrischen Achse eines mit diesem kämmenden Stirnrades aufgespannt wird und
Fig. 7 ausschnittsweise ein nicht erfindungsgemäßes Kronenraddifferential, bei welchem eine Ritzelwelle ein Zahnrad mit zwei scheibenförmigen Anschlagkörpern aufweist.

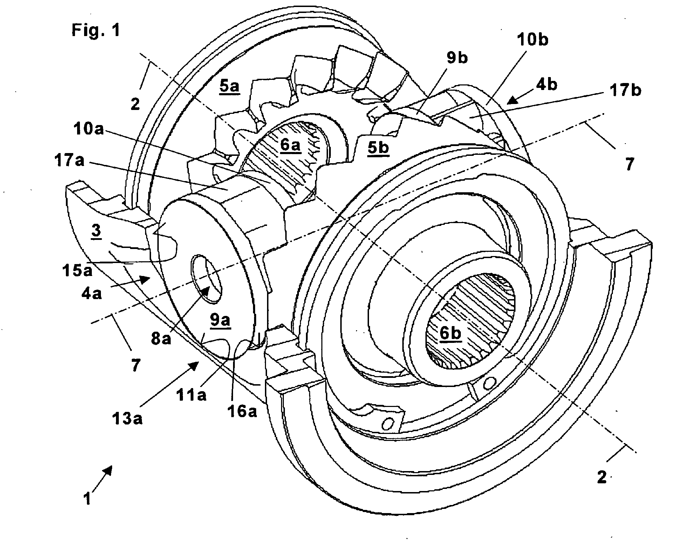

Fig. 1 zeigt ein Kronenraddifferential 1 eines Hinterachsgetriebes in einer geschnitten-perspektivischen Darstellung, wobei durch eine Ebene geschnitten wurde, welche zwischen einer Rotationsachse 2 des Kronenraddifferentials 1 bzw. von Kronenrädern 5a, 5b und einer geometrischen Achse 7 von Ausgleichsrädern 4a, 4b aufgespannt wird.

Dieses Kronenraddifferential 1 umfasst ein zylindrisches Gehäuse 3, dessen Rotationsachse 2 in üblicher Weise deckungsgleich mit einer geometrischen Achse von nicht näher dargestellten Achswellen ist. Die folgend verwendeten Bezeichnungen "axial" und "radial" beziehen sich auf diese geometrische Rotationsachse 2, wenn die Bezeichnungen nicht explizit auf einen speziellen rotationssymmetrischen Körper bezogen sind.

An einem axialen Ende ist das Gehäuse 3 einteilig mit einem nicht näher dargestellten Tellerrad ausgestaltet.

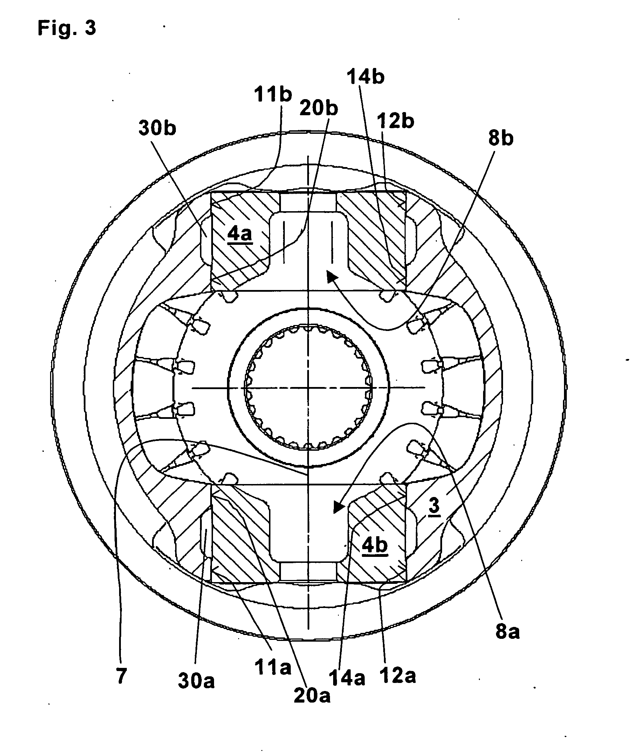

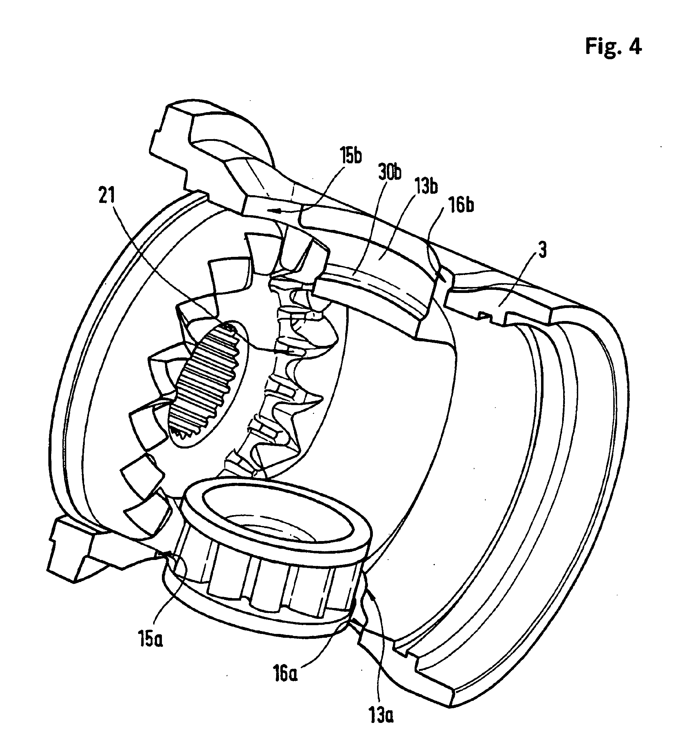

Das Gehäuse 3 weist axial mittig zwei diametral gegenüberliegende Gehäuseausnehmungen 13a, 13b auf, in welchen die geradverzahnten Ausgleichsräder 4a, 4b bezüglich deren geometrischer Achse 7 radial gelagert sind. Die Gehäuseausnehmung 13b ist dabei in Fig. 4 ersichtlich. Die Ausgleichsräder 4a, 4b weisen eine Stirnverzahnung 17a bzw. 17b auf. Die geometrischen Achse 7 steht senkrecht zur Rotationsachse 2. Zentrisch in diesen Ausgleichsrädern 4a, 4b sind Ausnehmungen 8a, 8b angeordnet, von denen die eine Ausnehmung 8b in Fig. 3 ersichtlich ist. Jedes der beiden Ausgleichsräder 4a bzw. 4b weist bezüglich dessen Achse 7 axial oberseitig und unterseitig jeweils einen scheibenförmigen Anschlagkörper 9a, 10a bzw. 9b, 10b auf, durch welchen ebenfalls die Ausnehmungen 8a, 8b verlaufen. Diese scheibenförmigen Anschlagkörper 9a, 10a bzw. 9b, 10b sind im Gehäuse 3 radial in teilkreisförmigen Randbereichen 11a, 12a, 20a, 14a bzw. 11b, 12b, 20b, 14b der beiden Gehäuseausnehmungen 13a, 13b gelagert, von denen in der Fig. 1 nur der eine teilkreisförmigen Randbereichen 11a ersichtlich ist. Diese teilkreisförmigen Randbereichen 11a, 12a, 20a, 14a, 11b, 12b, 20b, 14b liegen bezüglich der Rotationsachse 2 in Umfangsrichtung um über eine möglichst große Fläche ein Antriebsmoment vom Gehäuse 3 auf die Ausgleichsräder 4a, 4b zu übertragen. In axialer Richtung weisen die Gehäuseausnehmungen 13a, 13b von den Ausgleichsrädern beabstandete Randbereiche 15a, 15b, 16a, 16b auf, die einen Schmiermitteldurchfluss und damit eine sichere Schmiermittelversorgung für die Radiallagerung der Ausgleichsräder 4a, 4b und für einen Verzahnungseingriff gewährleisten. Bei diesem Verzahnungseingriff kämmen die Ausgleichsräder 4a, 4b mit den konzentrisch zur Rotationsachse 2 ausgerichteten Kronenrädern 5a, 5b, welche mittels einer Keilwellenverzahnung die nicht näher dargestellten Achswellen drehfest aufnehmen. Die Kronenräder 5a, 5b sind in der axial voneinander weg weisenden Richtung mittels eines axialen Sicherungsringes DIN 472 gegen eine Verschiebung in diese Richtung gegenüber dem Gehäuse 3 abgestützt. Zwischen dem jeweiligen Kronenrad 5a bzw. 5b und dessen Sicherungsring ist jeweils eine Distanzscheibe zur Einstellung des axialen Abstandes zwischen den beiden Kronenrädern 5a, 5b angeordnet.

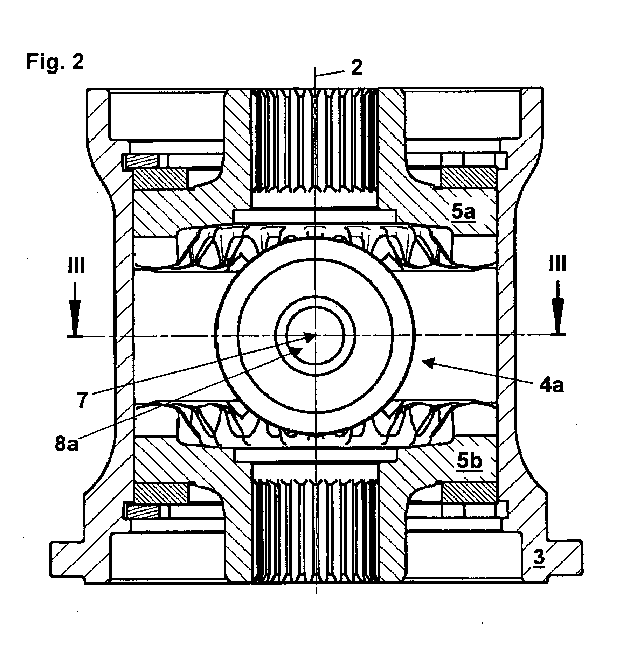

Fig. 2 zeigt das Kronenraddifferential 1 aus Fig. 1 in einer geschnitten-zweidimensionalen Darstellung. Zusätzlich ist das über der Schnittebene liegende eine Ausgleichsrad 4a dargestellt.

Fig. 3 zeigt das Kronenraddifferential 1 in einem ebenen Schnitt gemäß Linie III-III aus Fig. 2. Dieser ebene Schnitt III-III erfolgt senkrecht zur Rotationsachse 2 und beinhaltet die Achse 7 der Ausgleichsräder 4a, 4b.

Die scheibenförmigen Anschlagkörper 9a bzw. 10a bzw. 9b bzw. 10b liegen bezüglich der Achse 7 der Ausgleichsräder 4a, 4b radial jeweils an zwei diesen zugeordneten teilkreisförmigen Randbereichen 11a, 12a bzw. 20a, 14a bzw. 11b, 12b bzw. 20b, 14b an. Zwischen den beiden teilkreisförmigen Randbereichen 11a, 12a bzw. 20a, 14a bzw. 11b, 12b bzw. 20b, 14b liegt eine unterbrochene Ringnut 30a, 30b, welche einen Schmiermitteldurchfluss der korrespondierend liegenden Stirnverzahnung der Ausgleichsräder 4a, 4b ermöglicht und eine Reibung zwischen der Stirnverzahnung 17a bzw. 17b und dem Gehäuse 3 verhindert. Damit ist auch sicher die Schmierung an der Verzahnung zwischen den Ausgleichsrädern 4a, 4b und den Kronenrädern 5a, 5b sichergestellt.

Ferner sind die Ausnehmungen 8a, 8b der Ausgleichsräder 4a, 4b ersichtlich, welche einen variierenden Durchmesser aufweisen. Der Durchmesser der beiden Ausnehmungen 8a, 8b nimmt dabei radial nach innen zu.

Zur Montage des Kronenraddifferentials 1 werden die beiden Ausgleichsräder 4a, 4b von außen in die Gehäuseausnehmungen 13a, 13b gesteckt. Im Anschluss werden die beiden Kronenräder 5a, 5b in das Gehäuse 3 eingesetzt und nach dem folgenden Einbau der besagten Distanzscheiben mittels der Sicherungsringe DIN 472 gesichert.

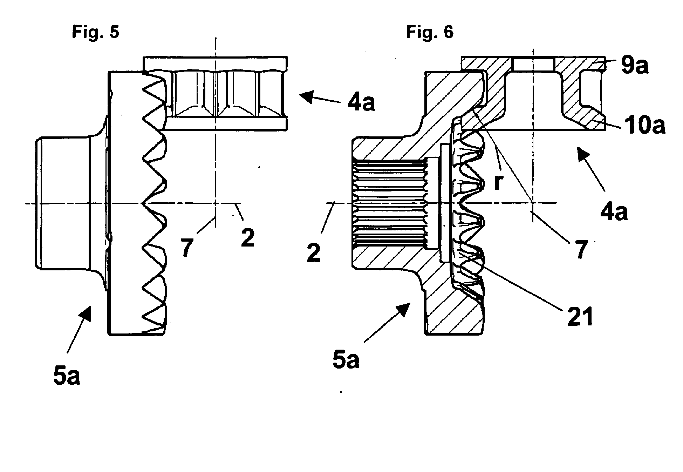

Fig. 5 zeigt eine Zahnradpaarung, welche Verwendung in einem Kronenraddifferential 1 gemäß Fig. 1 bis Fig. 4 findet. Diese Zahnradpaarung umfasst das eine Ausgleichsrad 4a und das mit diesem kämmende eine Kronenrad 5a.

Fig. 6 zeigt die Zahnradpaarung gemäß Fig. 5 in einer geschnittenen Darstellung, wobei der Schnitt durch eine Ebene erfolgt, welche zwischen der Rotationsachse 2 und der Achse 7 aufgespannt wird.

Der oberseitiger scheibenförmige Anschlagkörper 9a des Ausgleichsrads 4a ist mit dessen Unterseite zur Anlage an der äußeren Mantelfläche des Kronenrades 5a bringbar. Der unterseitige scheibenförmige Anschlagkörper 10a des Ausgleichsrads 4a ist hingegen mit dessen Oberseite zur Anlage an einer Verrippung der Kronenradverzahnung bringbar. Bei dieser Verrippung ist jedem Zahn der Kronenradverzahnung eine sich radial nach innen erstreckende Rippe 21 zugeordnet. Diese Rippen 21 weisen sphärisch-konkave Oberflächen auf, welche sich auf korrespondierend sphärisch-konvexen Oberflächen des unterseitigen scheibenförmige Anschlagkörpers 9a abwälzen. Diese sphärisch-konvexen Oberflächen liegen dabei in Zahnzwischenräumen des scheibenförmige Anschlagkörpers 9a. Die sphärisch-konvexe bzw. die sphärisch-konkave Oberfläche weist einen Radius r zum Kreuzungspunkt der Rotationsachse 2 mit der Achse 7 auf.

Im üblichen Fahrbetrieb eines Fahrzeuges, in welchem das Kronenraddifferential 1 eingebaut ist, wirkt eine Fliehkraft infolge der Rotation um die Rotationsachse 2 auf das Ausgleichsrad 4a ein. Infolge dieser Fliehkraft liegt der unterseitige scheibenförmige Anschlagkörper 10a an dem Kronenrad 5a an, wohingegen der oberseitige scheibenförmige Anschlagkörper 9a ein Spiel zu dem Kronenrad 5a aufweist.

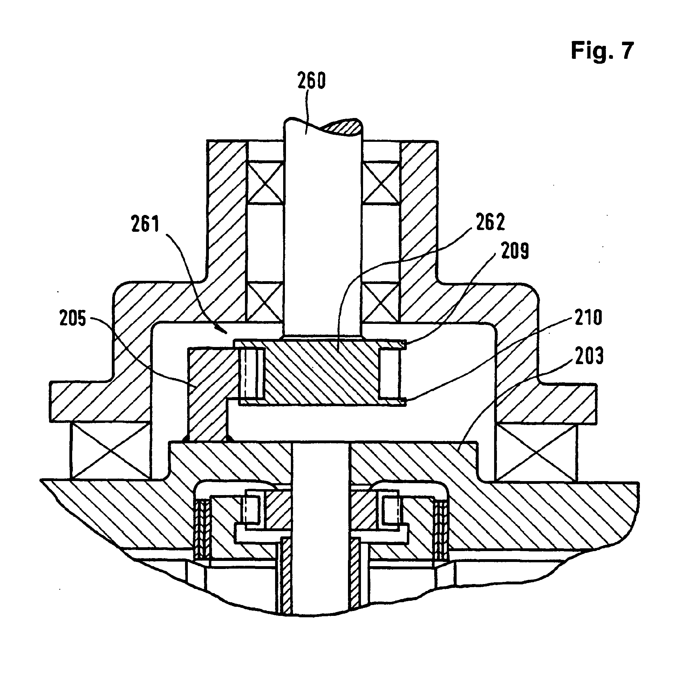

Fig. 7 zeigt ausschnittsweise ein nicht erfindungsgemäßes Kronenraddifferential, bei welchem eine Ritzelwelle 260 ein Zahnrad 262 mit zwei scheibenförmigen Anschlagkörpern 209, 210 aufweist. Das Zahnrad 262 bildet zusammen mit einem Kronenrad 205, welches fest mit einem Gehäuse 203 des Kronenraddifferentials verbunden ist, eine Antriebsverzahnung 261.

Die beiden scheibenförmigen Anschlagkörper 209, 210 sind einteilig mit dem übrigen Zahnrad 262 ausgeführt.

Die Verwendung der Zahnradpaarung für ein Differential ist' nicht auf Kronenraddifferentiale für Hinterachsgetriebe beschränkt. So sind auch Differentiale für Vorderachsgetriebe als auch Längsdifferentiale denkbar.

Für die Wirkung als Anschlag muss der Anschlagkörper nicht bewegungsfest gegenüber der Verzahnung des Ausgleichsrades sein. So kann zur Erleichterung der Bearbeitung der Stirnverzahnung, des Ausgleichsrades beispielsweise eine Scheibe ausreichend sein, welche drehfest oder drehbar auf einem Verzahnungsgrundkörper angeordnet ist. Dabei können zwei Scheiben mittels einer zentralen Verschraubung oder Vernietung den Verzahnungsgrundkörper zwischen sich verspannen. Ferner ist es möglich, die Scheiben mit dem Verzahnungsgrundkörper bewegungsfest zu verkleben.

Eine entsprechende Schmierung vorausgesetzt, kann anstatt einer Geradverzahnung auch eine Schrägverzahnung Anwendung finden. Die Kräfte infolge der Schrägverzahnung, welche bestrebt sind, das Ausgleichsrad nach innen oder nach außen zu schieben, werden dabei durch den bzw. die Anschlagkörper abgestützt.

Zur Erleichterung der Montage kann am Gehäuse des Kronenraddifferentials ein Anschlag bzw. Absatz angebracht sein, der verhindert, dass die Ausgleichsräder nach dem Einbau in das Gehäuse, aber zeitlich vor dem Einbau der Kronenräder, in das Gehäuse fallen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Die erfindungsgemäßen Vorrichtungen befinden sich in den Ansprüchen.

## Patentansprüche

1. Differential (1) mit
- einer Zahnradpaarung, welche ein erstes Zahnrad (5a, 5b) und ein zweites Zahnrad (4a, 4b) mit Zähnen umfasst und das erste Zahnrad ein Kronenrad (5a, 5b) und das zweite Zahnrad ein Stirnrad (4a, 4b) ist und
- einem Gehäuse (3) mit einer Rotationsachse (2),
wobei
- das erste Zahnrad (5a, 5b) mit einer Achswelle verbunden ist und das zweite Zahnrad (4a, 4b) ein Ausgleichsrad ist,
**dadurch gekennzeichnet, dass**
- an beiden axialen Enden des zweiten Zahnrades (4a, 4b) ein Anschlagkörper (9a, 10a, 9b, 10b) befestigt ist, welcher sich zumindest zwischen mehreren Zähnen erstreckt und
- **der** Anschlagkörper (9a bzw. 10a bzw. 9b bzw. 10b) scheibenförmig ausgestaltet ist und sich in Umfangsrichtung um die Rotationsachse (2) am Gehäuse (3) abstützt.

2. Differential nach Patentanspruch 1,
**dadurch gekennzeichnet,**
**dass** das Stirnrad (4a, 4b) geradverzahnt ist.

3. Differential nach Patentanspruch 1 oder 2,
**dadurch gekennzeichnet,**
**dass** eine radiale Ausdehnung des Anschlagkörpers (9a bzw. 10a bzw. 9b bzw. 10b) zumindest näherungsweise dem Kopfkreisdurchmesser der besagten Zähne entspricht.

4. Differential nach einem der vorhergehenden Patentansprüche,
**dadurch gekennzeichnet,**
**dass** der Anschlagkörper (9a bzw. 10a bzw. 9b bzw. 10b) bewegungsfest mit dem zweiten Zahnrad (4a, 4b) verbunden ist.

5. Differential nach Patentanspruch 4,
**dadurch gekennzeichnet,**
**dass** der Anschlagkörper (9a bzw. 10a bzw. 9b bzw. 10b) einteilig mit dem zweiten Zahnrad ist.

6. Differential nach einem der vorhergehenden Patentansprüche,
**dadurch gekennzeichnet,**
**dass** von den Zähnen des Kronenrads (5a bzw. 5b) sich Rippen (21) radial nach innen erstrecken, welche mit Gegenflächen des Anschlagkörpers (9a bzw. 10a bzw. 9b bzw. 10b) des Stirnrades (4a bzw. 4b) korrespondieren.

7. Differential nach einem der vorhergehenden Patentansprüche"
**dadurch gekennzeichnet,**
**dass** das Ausgleichsrad (4a, 4b) von außen in eine Gehäuseausriehmung (13a, 13b) steckbar ist.

## Claims

1. Differential (1) with:
- a gear pair comprising a first gearwheel (5a, 5b) and a second gearwheel (4a, 4b), the first gearwheel being a crown gear (5a, 5b) and the second gearwheel being a spur gear (4a, 4b), and
- a housing (3) with a rotation axis (2),
such that
- the first gearwheel (5a, 5b) is connected to an axle shaft and the second gearwheel (4a, 4b) is a compensating gear,
**characterised in that**
- to the two axial faces of the second gearwheel (4a, 4b) are attached abutment bodies (9a, 10a, 9b, 10b), which extend at least between a plurality of teeth, and
- the abutment body (9a and 10a or 9b and 10b) is of disc-shaped design and is supported in the circumferential direction around the rotation axis (2) against the housing (3).

2. Differential according to Claim 1,
**characterised in that** the spur gear (4a, 4b) has straight teeth.

3. Differential according to Claims 1 or 2,
**characterised in that**
a radial extension of the abutment body (9a and 10a or 9b and 10b) corresponds at least approximately to the crown circle diameter of the said teeth.

4. Differential according to any of the preceding claims,
**characterised in that**
the abutment body (a and 10a or 9b and 10b) is connected positionally fixed to the second gearwheel (4a, 4b).

5. Differential according to Claim 4,
**characterised in that**
the abutment body (9a and 10a or 9b and 10b) is made integrally with the second gearwheel.

6. Differential according to any of the preceding claims,
**characterised in that**
ribs (21) extend radially inwards from the teeth of the crown gear (5a, 5b), which correspond with counter-surfaces of the abutment body (9a and 10a or 9b and 10b) of the spur gear (4a, 4b).

7. Differential according to any of the preceding claims,
**characterised in that**
the compensating gear (4a, 4b) can be inserted from the outside into a housing aperture (13a, 13b).

## Revendications

1. Différentiel (1) doté
- d'une paire de roues dentées qui comprend une première roue d'engrenage (5a, 5b) et une seconde roue d'engrenage (4a, 4b) pourvues de dents et la première roue d'engrenage est une couronne dentée (5a, 5b) et la seconde roue d'engrenage est un pignon droit (4a, 4b) et
- d'un carter (3) avec un axe de rotation (2),
- la première roue d'engrenage (5a, 5b) étant reliée à un arbre primaire et la seconde roue d'engrenage (4a, 4b) étant un pignon satellite
**caractérisé en ce que**
- sur les deux extrémités axiales de la seconde roue d'engrenage (4a, 4b) est fixé un corps de butée (9a ou 10a ou 9b ou 10b) qui s'étend au moins entre plusieurs dents et
- le corps de butée (9a ou 10a ou 9b ou 10b) est conçu en forme de disque et s'appuie en direction périphérique autour de l'axe de rotation (2) sur le carter (3).

2. Différentiel selon la revendication 1, **caractérisé en ce que** le pignon droit (4a, 4b) est à denture droite.

3. Différentiel selon la revendication 1 ou 2, **caractérisé en ce qu'**une dilatation radiale du corps de butée (9a ou 10a ou 9b ou 10b) correspond au moins approximativement au diamètre du cercle de tête desdites dents.

4. Différentiel selon l'une quelconque des revendications précédentes, **caractérisé en ce que** le corps de butée (9a ou 10a ou 9b ou 10b) est relié solidaire en mouvement à la seconde roue d'engrenage (4a, 4b).

5. Différentiel selon la revendication 4, **caractérisé en ce que** le corps de butée (9a ou 10a ou 9b ou 10b) est réalisé d'une seule pièce avec la seconde roue d'engrenage.

6. Différentiel selon l'une quelconque des revendications précédentes, **caractérisé en ce que** des nervures (21) s'étendent radialement depuis les dents de la couronne dentée (5a ou 5b) vers l'intérieur, lesquelles correspondent aux surfaces antagonistes du corps de butée (9a ou 10a ou 9b ou 10b) du pignon droit (4a, 4b).

7. Différentiel selon l'une quelconque des revendications précédentes, **caractérisé en ce que** le pignon satellite (4a, 4b) peut être fixé de l'extérieur dans une cavité de carter.
